# EUROPEAN PATENT APPLICATION

(11) **EP 4 818 974 A1**
(43) Date of publication of application: **07.10.2026**
(21) Application number: 25167344.8
(22) Date of filing: 31.03.2025
(51) Int. Cl.: G06N 3/0464, G06N 5/025, G06N 20/20, G06N 7/01

(54) **GRAPH NEURAL NETWORKS**

(71) Applicant: FUJITSU LIMITED, Kawasaki-shi, Kanagawa 211-8588 (JP)
(72) Inventor: WHITE, Adam, Slough, SL1 2BE (GB)
(74) Representative: Haseltine Lake Kempner LLP

(57) **Abstract**

A method comprising: generating subgraphs graph based on classification scores corresponding to nodes and obtained by inputting input graph into a graph neural network, GNN, wherein each node in each input graph comprises a plurality of values corresponding respectively to a plurality of features; determining statistical measures of each feature's values in the subgraphs to generate statistical measures for each subgraph, and obtaining for each subgraph classification probabilities corresponding respectively to a plurality of classes; performing k-means clustering on the subgraphs based on the statistical measures to generate a plurality of clusters of subgraphs; generating, for each cluster of subgraphs, a set of surrogate models to approximate the classification probabilities, respectively, of the subgraphs in the cluster, in terms of the statistical measures; and determining, based on the surrogate models of each set of surrogate models, feature importance scores.

## Description

The present invention relates to graph neural networks (GNNs), and in particular to a computer-implemented method, a computer program, and an information programming apparatus.

Graph neural networks (GNNs) are a type of neural network used for processing data that can be represented as a graph. A graph consists of nodes that represent entities and edges that represent relationships between these entities. Each node contains feature data about its entity. A GNN uses pairwise message passing in order to achieve one of three types of task: node classification, edge prediction and whole graph classification/regression scoring.

GNNs are complex, opaque, non-linear systems whose internal workings are beyond the cognitive capabilities of humans to understand. Yet there is an urgent need to understand a GNN's reasoning, and this requires explainable AI (henceforth GNN XAI). It is important for users to know that a GNN is 'getting it right for the right reasons' and that it can be trusted to apply to new cases. This is particularly important for high stakes areas such as medical diagnosis or security. It is also important for developers of a GNN to understand the GNN's reasoning, as this can assist with debugging and training.

Furthermore, with increasing demands put on computers and computing devices, it is advantageous to reduce storage and processing load.

In light of the above, a method for improving explainability in GNNs and/or reducing storage/processing loads is desired.

The present invention is defined by the independent claims, to which reference should now be made. Specific embodiments are defined in the dependent claims.

According to an embodiment of a first aspect there is disclosed herein a computer-implemented method comprising: generating, for each of a plurality of input graphs, a set of subgraphs by performing k-means clustering on nodes of the input graph based on classification scores corresponding to the nodes and obtained by inputting the input graph into a graph neural network, GNN, (for classifying graphs as corresponding to one of a plurality of classes) wherein each node in each input graph comprises a plurality of values corresponding respectively to a plurality of features; determining statistical measures of each feature's values in each of a plurality of subgraphs comprising the subgraphs of each set of subgraphs, to generate a set of statistical measures for each subgraph, and obtaining for each subgraph, based on the classification scores corresponding to the nodes of the subgraph, classification probabilities corresponding respectively to a/the plurality of classes (of the GNN); performing k-means clustering on the subgraphs based on the statistical measures to generate a plurality of clusters of subgraphs; generating, for each cluster of subgraphs, a set of surrogate models to approximate/describe the classification probabilities, respectively, of the subgraphs in the cluster, in terms of/based on the statistical measures; and determining, based on the surrogate models of each set of surrogate models, feature importance scores, each feature importance score corresponding to a feature of the plurality of features, a subgraph of the plurality of subgraphs, and a class of the plurality of classes, and indicating importance of the feature (concerned) to the classification probability of the subgraph (concerned) corresponding to the class (concerned).

Reference will now be made, by way of example, to the accompanying drawings, in which:
Figure 1 is a flowchart illustrating a method;
Figure 2 is a flowchart illustrating a method;
Figure 3 is a diagram illustrating a method;
Figure 4 is a diagram illustrating a WSI;
Figure 5 is a diagram illustrating subgraphs;
Figure 6 is a table of subgraph classification probabilities;
Figure 7 is a diagram illustrating a table of counterfactuals;
Figure 8 is a diagram illustrating a table of counterfactuals;
Figure 9 is a diagram illustrating a minimum subgraph;
Figure 10 is a diagram illustrating a method; and
Figure 11 is a diagram illustrating an information processing apparatus.

### Brief Description of Technical Terms Used (not exhaustive)

***Calinski-Harrabaz index*** is a metric used to measure of the quality of a clustering solution. It compares the within-cluster variance to the between cluster variance.

***Connected graph.*** A graph where there exists a path between every pair of nodes.

***Cross-entropy loss.*** A commonly used loss function in machine learning, particularly in classification tasks. It measures the dissimilarity between two probability distributions: the predicted probability distribution and the true (target) probability distribution.

***Dependent variable.*** In a regression analysis, the dependent variable is the variable to be predicted.

***Euclidean distance.*** The straight-line distance between two points in Euclidean space.

***Feature importance.*** A score assigned to each feature, indicating how much it impacts the GNN's output e.g. its classification probabilities or regression scores.

***Generalised Additive Model.*** A type of regression model that allows for flexible relationships between the dependent and independent variables by using smoothing functions to capture non-linear patterns in the data.

***Independent variables.*** In a regression analysis, the independent variables are used as input to the model to predict the value of the dependent variable.

***Logit scores*** The arguments for the softmax function. They are the unnormalized probabilities of each class. After applying the softmax function, these logits are transformed into probabilities that sum to one.

***Motif.*** A recurrent and statistically significant pattern found within a graph. Examples might be triangles, squares or house shapes.

***Regression dataset.*** A dataset containing data for each of the independent variables and the dependent variables that can be used to create a regression model.

***Smooth functions.*** Functions whose slopes change continuously, with no abrupt jumps or discontinuities.

***Subgraph.*** A subset of a graph that consists of a subset of its nodes and a subset of its edges, where the edges connect only the nodes in the subset.

GNN XAI methods aim to explain a GNN's output in terms of its input data. Most GNN XAI methods provide *local* explanations, which explain single predictions. This contrasts with GNN XAI methods that provide *global* explanations, which explain predictions over an entire dataset. Global methods can provide a holistic understanding of a GNN, but in cases where there is a complex nonlinear decision boundary then local methods can be of greater accuracy. Methodologies disclosed herein may be considered to correspond to local methods, though conclusions may be drawn and applied to a dataset, as described below.

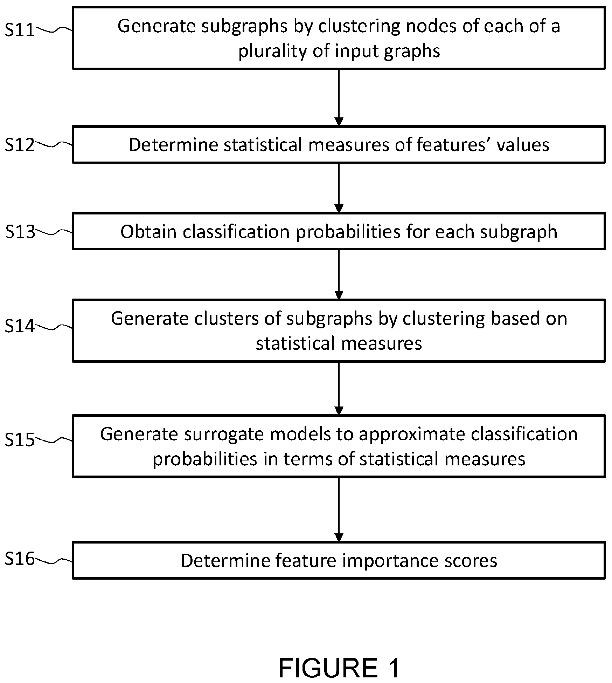

Figure 1 is a flowchart illustrating a method comprising steps S11-S16.

Step S11 comprises generating subgraphs by clustering nodes of each of a plurality of input graphs. That is, step S11 comprises generating, for each of a plurality of input graphs, a set of subgraphs by performing k-means clustering on nodes of the input graph based on classification scores corresponding to the nodes and obtained by inputting the input graph into a graph neural network, GNN, (for classifying graphs as corresponding to one of a plurality of classes) wherein each node in each input graph comprises a plurality of values corresponding respectively to a plurality of features.

Step S12 comprises determining statistical measures of features' values. That is, step S12 comprises determining statistical measures of each feature's values in each of a plurality of subgraphs comprising the subgraphs of each set of subgraphs, to generate a set of statistical measures for each subgraph.

Step S13 comprises obtaining classification probabilities for each subgraph. That is, step S13 comprises obtaining for each subgraph, based on the classification scores corresponding to the nodes of the subgraph, classification probabilities corresponding respectively to a/the plurality of classes (of the GNN).

Step S14 comprises generating clusters of subgraphs by clustering based on the statistical measures. That is, step S14 comprises performing k-means clustering on the subgraphs based on the statistical measures to generate a plurality of clusters of subgraphs.

Step S15 comprises generating surrogate models to approximate the classification probabilities in terms of the statistical measures. That is, step S15 comprises generating, for each cluster of subgraphs, a set of surrogate models to approximate/describe the classification probabilities, respectively, of the subgraphs in the cluster, in terms of/based on the statistical measures.

Step S16 comprises determining feature importance scores. That is, step S16 comprises determining, based on the surrogate models of each set of surrogate models, feature importance scores, each feature importance score corresponding to a feature of the plurality of features, a subgraph of the plurality of subgraphs, and a class of the plurality of classes, and indicating importance of the feature (concerned) to the classification probability of the subgraph (concerned) corresponding to the class (concerned).

There is thus disclosed herein, according to an embodiment of a first aspect, a computer-implemented method comprising: generating, for each of a plurality of input graphs, a set of subgraphs by performing k-means clustering on nodes of the input graph based on classification scores corresponding to the nodes and obtained by inputting the input graph into a graph neural network, GNN, (for classifying graphs as corresponding to one of a plurality of classes) wherein each node in each input graph comprises a plurality of values corresponding respectively to a plurality of features; determining statistical measures of each feature's values in each of a plurality of subgraphs comprising the subgraphs of each set of subgraphs, to generate a set of statistical measures for each subgraph, and obtaining for each subgraph, based on the classification scores corresponding to the nodes of the subgraph, classification probabilities corresponding respectively to a/the plurality of classes (of the GNN); performing k-means clustering on the subgraphs based on the statistical measures to generate a plurality of clusters of subgraphs; generating, for each cluster of subgraphs, a set of surrogate models to approximate/describe the classification probabilities, respectively, of the subgraphs in the cluster, in terms of/based on the statistical measures; and determining, based on the surrogate models of each set of surrogate models, feature importance scores, each feature importance score corresponding to a feature of the plurality of features, a subgraph of the plurality of subgraphs, and a class of the plurality of classes, and indicating importance of the feature (concerned) to the classification probability of the subgraph (concerned) corresponding to the class (concerned).

Generating each set of subgraphs may comprise performing the k-means clustering on the nodes of the input graph (concerned) based on the classification scores corresponding to the nodes and based on spatial coordinates of the nodes.

Generating each set of subgraphs may comprise performing the k-means clustering on the nodes of the input graph (concerned) based on an objective vector for each of the nodes, each objective vector comprising the classification scores corresponding to the node and spatial coordinates of the node.

The spatial coordinates in the objective vectors may be weighted compared to the classification scores.

Generating each set of subgraphs may comprise, after performing the k-means clustering, assigning any node with fewer than a threshold number of connections with its subgraph to another subgraph with which the node has a greater number of connections.

The computer-implemented method may comprise, if the node has a greater number of connections with more than one other subgraph, assigning the node to the subgraph with which the node has the most connections. The threshold number of connections may be three.

Generating each set of subgraphs may comprise, after performing the k-means clustering: determining classification probabilities of each subgraph of the set of subgraphs based on the classification scores corresponding to the nodes of the subgraph; and for each subgraph of the set of subgraphs, when a (Euclidean) distance between the subgraph's classification probabilities and an adjacent subgraph's classification probabilities is below a distance threshold, merging the two subgraphs into one subgraph.

The statistical measures of each feature's values may comprise a plurality of mean, maximum, standard deviation, skewness coefficient, kurtosis coefficient, trimmed mean, and inter-quartile range.

The statistical measures of each feature's values may comprise at least mean and standard deviation.

The statistical measures of each feature's values may comprise a plurality of mean, maximum, standard deviation, skewness coefficient, and kurtosis coefficient.

Obtaining the classification probabilities for each subgraph may comprise, for each subgraph, summing the classification scores for each class across the nodes of the subgraph, and applying a softmax function to the summed classification scores.

Generating each set of surrogate models may comprise generating a set of gradient boosted machines, GBMs, or generating a set of generalized additive models, GAMs

Generating each set of surrogate models may comprise generating a set of gradient boosted machines, GBMs.

Generating the feature importance scores may comprise determining SHAP scores for the GBMs.

Generating each set of surrogate models may comprise generating a set of generalized additive models, GAMs.

Generating each set of GAMs may comprise using a step-wise process and an Akaike information criterion.

Generating each GAM may comprise: performing a model fitting process comprising approximating the classification probabilities of the class concerned by fitting a plurality of first candidate models using a plurality of variables, respectively, each variable corresponding to one of the statistical measures for one of the features, and selecting the variable whose corresponding first candidate model has the lowest Akaike information criterion; repeating the model fitting process by approximating the classification probabilities of the class concerned by fitting a plurality of second candidate models, each second candidate model based on two variables comprising the selected variable as a first variable and another of the variables as a second variable, and selecting the second variable whose corresponding second candidate model has the lowest Akaike information criterion; iteratively repeating the model fitting process to select at least a further variable by repeatedly approximating the classification probabilities of the class concerned by fitting a plurality of further candidate models based on the variables selected so far and a further variable and selecting the further variable whose corresponding further candidate model has the lowest Akaike information criterion, until the Akaike information criterion of an iteration is not lower than that of an iteration immediately preceding the iteration.

Determining each feature importance score may comprise summing the contribution to the approximated classification probability by any variables corresponding to the feature (concerned) according to the GAM corresponding to the cluster of subgraphs to which subgraph (concerned) belongs.

Determining each feature importance score may comprise evaluating any terms in an equation defining the GAM concerned which correspond to the feature concerned based on the values of the variables as applied to the subgraph concerned, and summing the results, wherein the GAM concerned is the GAM corresponding to the cluster of subgraphs to which the subgraph concerned belongs.

The computer-implemented method may comprise outputting the feature importance scores.

The computer-implemented method may comprise: for each subgraph, removing the subgraph from the input graph concerned to generate a remainder graph, and determining a difference between the input graph's classification probabilities and the remainder graph's classification probabilities; and outputting the difference between the input graph's classification probabilities and the remainder graph's classification probabilities for each subgraph.

The computer-implemented method may comprise: for each subgraph, inputting the subgraph to the GNN to obtain isolated classification probabilities and determining a difference between the subgraph's isolation classification probabilities and the subgraph's classification probabilities computed based on the classification scores of the subgraph's nodes as part of the input graph; and outputting the difference between the subgraph's isolation classification probabilities and the subgraph's classification probabilities computed based on the classification scores of the subgraph's nodes as part of the input graph for each subgraph.

The computer-implemented method may comprise performing a minimum subgraph process for one of the input graphs comprising: repeating the generating of the set of subgraphs for the input graph for a plurality of iterations, varying k in the k-means clustering in each successive iteration, to obtain a plurality of candidate subgraphs which includes the subgraphs of the set of subgraphs generated in the original iteration; inputting each candidate subgraph into the GNN and obtaining classification probabilities for each candidate subgraph; computing a subgraph score for each candidate subgraph based on a difference between the input graph's classification probabilities and the candidate subgraph's classification probabilities and based on a size of the candidate subgraph; and selecting the candidate subgraph having the lowest subgraph score as a minimum subgraph of the input graph.

The minimum subgraph process may comprise, for each candidate subgraph adjacent to the minimum subgraph (in turn), expanding the minimum subgraph by one layer of nodes into the adjacent subgraph to generate a modified subgraph, determining a subgraph score for the modified subgraph, and, if the modified subgraph's subgraph score is lower than the subgraph score of the (current) minimum subgraph, selecting the modified subgraph as the minimum subgraph instead of the previously selected minimum subgraph.

The minimum subgraph process may comprise, for each candidate subgraph adjacent to the minimum subgraph (in turn), contracting the minimum subgraph by one layer of nodes, those nodes instead being assigned to the adjacent subgraph, to generate a modified subgraph, determining a subgraph score for the modified subgraph, and, if the modified subgraph's subgraph score is lower than the subgraph score of the (current) minimum subgraph, selecting the modified subgraph as the minimum subgraph instead of the previously selected minimum subgraph.

The minimum subgraph process may comprise, for each candidate subgraph adjacent to the minimum subgraph (in turn): expanding the minimum subgraph by one layer of nodes into the adjacent subgraph to generate a first modified subgraph, determining a subgraph score for the first modified subgraph, and, if the first modified subgraph's subgraph score is lower than the subgraph score of the (current) minimum subgraph, selecting the first modified subgraph as the minimum subgraph instead of the previously selected minimum subgraph; and contracting the minimum subgraph by one layer of nodes, those nodes instead being assigned to the adjacent subgraph, to generate a second modified subgraph, determining a subgraph score for the second modified subgraph, and, if the second modified subgraph's subgraph score is lower than the subgraph score of the (current) minimum subgraph, selecting the second modified subgraph as the minimum subgraph instead of the previously selected minimum subgraph.

k may be varied between a threshold number of clusters and a initial number of clusters.

Repeating the generating of the set of subgraphs for the plurality of iterations may comprise repeating the generating the set of subgraphs, reducing k by one in the k-means clustering in each successive iteration until an iteration in which k is a threshold number of clusters.

The computer-implemented method may comprise outputting the minimum subgraph.

The computer-implemented method may comprise performing the minimum subgraph process for each of the input subgraphs and storing the minimum subgraphs (instead of the input subgraphs).

The input graphs may correspond to/have been generated based on whole-slide images, WSIs (of human tissue), each node in an input graph corresponding to a patch of the WSI.

The GNN may be for classifying an input graph as corresponding to a breast cancer sub-type.

The GNN may be for classifying an input graph as corresponding to a cancer diagnosis.

The features may comprise any of a neoplastic cell count, an inflammatory cell count, a connective cell count, a dead cell count and a non-neoplastic cell count.

The input graphs may correspond to molecules.

The GNN may be for classifying an input graph as corresponding to presence or absence of a mutagenic effect on a bacterium.

The computer-implemented method may comprise inputting the input graphs into the GNN and obtaining the classification scores corresponding to the nodes of each of the input graphs.

The feature importance scores may comprise a set of feature importance scores for each of the plurality of features, each set of feature importance scores including feature importance scores for each of the plurality of subgraphs, and each feature importance score indicating the importance of the feature (concerned) to the classification probability of the subgraph (concerned) corresponding to a class of the plurality of classes.

The computer-implemented method may comprise, for each of the plurality of features, averaging or totaling the feature importance scores corresponding to the feature (across the plurality of classes and across the plurality of subgraphs) to determine a plurality of aggregate feature importance scores corresponding respectively to the plurality of features.

The computer-implemented method may comprise, if at least one aggregate feature importance score is below a score threshold, selecting the at least one feature corresponding to the at least one feature importance score for pruning; and pruning the selected at least one feature from each of the plurality of input graphs.

The computer-implemented method may comprise pruning the selected at least one feature from each graph of a set of graphs (which are to be input to the GNN (for classification)).

Pruning the selected at least one feature from each graph may comprise, for each graph, removing the feature from each node in the graph.

According to an embodiment of a second aspect there is disclosed herein a computer program which, when run on a computer, causes the computer to carry out a method comprising: generating, for each of a plurality of input graphs, a set of subgraphs by performing k-means clustering on nodes of the input graph based on classification scores corresponding to the nodes and obtained by inputting the input graph into a graph neural network, GNN, (for classifying graphs as corresponding to one of a plurality of classes) wherein each node in each input graph comprises a plurality of values corresponding respectively to a plurality of features; determining statistical measures of each feature's values in each of a plurality of subgraphs comprising the subgraphs of each set of subgraphs, to generate a set of statistical measures for each subgraph, and obtaining for each subgraph, based on the classification scores corresponding to the nodes of the subgraph, classification probabilities corresponding respectively to a/the plurality of classes (of the GNN); performing k-means clustering on the subgraphs based on the statistical measures to generate a plurality of clusters of subgraphs; generating, for each cluster of subgraphs, a set of surrogate models to approximate/describe the classification probabilities, respectively, of the subgraphs in the cluster, in terms of/based on the statistical measures; and determining, based on the surrogate models of each set of surrogate models, feature importance scores, each feature importance score corresponding to a feature of the plurality of features, a subgraph of the plurality of subgraphs, and a class of the plurality of classes, and indicating importance of the feature (concerned) to the classification probability of the subgraph (concerned) corresponding to the class (concerned).

According to an embodiment of a third aspect there is disclosed herein an information processing apparatus comprising a memory and a processor connected to the memory, wherein the processor is configured to: generate, for each of a plurality of input graphs, a set of subgraphs by performing k-means clustering on nodes of the input graph based on classification scores corresponding to the nodes and obtained by inputting the input graph into a graph neural network, GNN, (for classifying graphs as corresponding to one of a plurality of classes) wherein each node in each input graph comprises a plurality of values corresponding respectively to a plurality of features; determine statistical measures of each feature's values in each of a plurality of subgraphs comprising the subgraphs of each set of subgraphs, to generate a set of statistical measures for each subgraph, and obtain for each subgraph, based on the classification scores corresponding to the nodes of the subgraph, classification probabilities corresponding respectively to a/the plurality of classes (of the GNN); perform k-means clustering on the subgraphs based on the statistical measures to generate a plurality of clusters of subgraphs; generate, for each cluster of subgraphs, a set of surrogate models to approximate/describe the classification probabilities, respectively, of the subgraphs in the cluster, in terms of/based on the statistical measures; and determine, based on the surrogate models of each set of surrogate models, feature importance scores, each feature importance score corresponding to a feature of the plurality of features, a subgraph of the plurality of subgraphs, and a class of the plurality of classes, and indicating importance of the feature (concerned) to the classification probability of the subgraph (concerned) corresponding to the class (concerned).

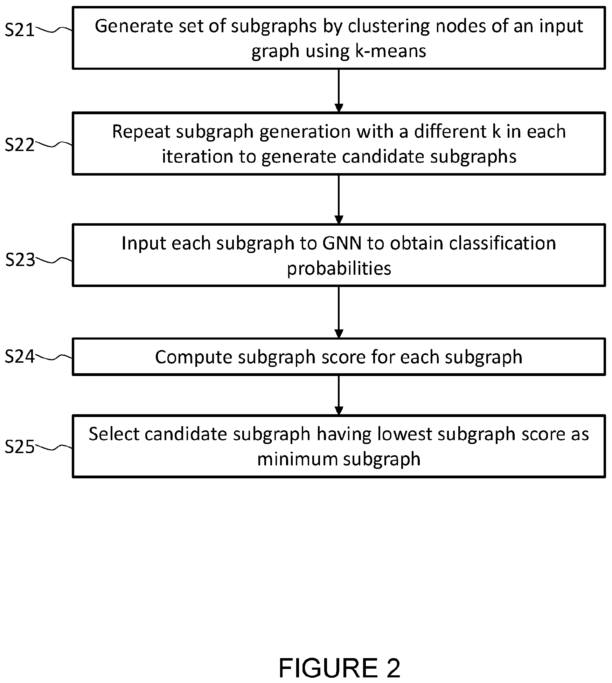

Figure 2 is a flowchart illustrating a method comprising steps S21-S25.

Step S21 comprises generating a set of subgraphs by clustering nodes of an unput graph using k-means. That is, step S21 comprises generating a set of subgraphs based on an input graph by performing k-means clustering on nodes of the input graph based on classification scores corresponding to the nodes and obtained by inputting the input graph into a graph neural network, GNN, (for classifying graphs as corresponding to one of a plurality of classes).

Step S22 comprises repeating the subgraph generation with a different k in each iteration to generate candidate subgraphs. That is, step S22 comprises repeating the generating of the set of subgraphs for the input graph for a plurality of iterations, varying k in the k-means clustering in each successive iteration, to obtain a plurality of candidate subgraphs which includes the subgraphs of the set of subgraphs generated in the original iteration.

Step S23 comprises inputting each subgraph to a GNN to obtain classification probabilities. That is, step S23 comprises inputting each candidate subgraph into the GNN and obtaining classification probabilities for each candidate subgraph.

Step S24 comprises computing a subgraph score for each subgraph. That is, step S24 comprises computing a subgraph score for each candidate subgraph based on a difference between the input graph's classification probabilities and the candidate subgraph's classification probabilities and based on a size of the candidate subgraph.

Step S25 comprises selecting the candidate subgraph having the lowest subgraph score as a minimum subgraph. That is, step S25 comprises selecting the candidate subgraph having the lowest subgraph score as a minimum subgraph of the input graph.

There is thus disclosed herein, according to an embodiment of a fourth aspect, a computer-implemented method comprising performing a minimum subgraph process for an input graph comprising: generating a set of subgraphs based on an input graph by performing k-means clustering on nodes of the input graph based on classification scores corresponding to the nodes and obtained by inputting the input graph into a graph neural network, GNN, (for classifying graphs as corresponding to one of a plurality of classes); repeating the generating of the set of subgraphs for the input graph for a plurality of iterations, varying k in the k-means clustering in each successive iteration, to obtain a plurality of candidate subgraphs which includes the subgraphs of the set of subgraphs generated in the original iteration; inputting each candidate subgraph into the GNN and obtaining classification probabilities for each candidate subgraph; computing a subgraph score for each candidate subgraph based on a difference between the input graph's classification probabilities and the candidate subgraph's classification probabilities and based on a size of the candidate subgraph; and selecting the candidate subgraph having the lowest subgraph score as a minimum subgraph of the input graph.

The minimum subgraph process may comprise, for each candidate subgraph adjacent to the minimum subgraph (in turn), expanding the minimum subgraph by one layer of nodes into the adjacent subgraph to generate a modified subgraph, determining a subgraph score for the modified subgraph, and, if the modified subgraph's subgraph score is lower than the subgraph score of the (current) minimum subgraph, selecting the modified subgraph as the minimum subgraph instead of the previously selected minimum subgraph.

The minimum subgraph process may comprise, for each candidate subgraph adjacent to the minimum subgraph (in turn), contracting the minimum subgraph by one layer of nodes, those nodes instead being assigned to the adjacent subgraph, to generate a modified subgraph, determining a subgraph score for the modified subgraph, and, if the modified subgraph's subgraph score is lower than the subgraph score of the (current) minimum subgraph, selecting the modified subgraph as the minimum subgraph instead of the previously selected minimum subgraph.

The minimum subgraph process may comprise, for each candidate subgraph adjacent to the minimum subgraph (in turn): expanding the minimum subgraph by one layer of nodes into the adjacent subgraph to generate a first modified subgraph, determining a subgraph score for the first modified subgraph, and, if the first modified subgraph's subgraph score is lower than the subgraph score of the (current) minimum subgraph, selecting the first modified subgraph as the minimum subgraph instead of the previously selected minimum subgraph; and contracting the minimum subgraph by one layer of nodes, those nodes instead being assigned to the adjacent subgraph, to generate a second modified subgraph, determining a subgraph score for the second modified subgraph, and, if the second modified subgraph's subgraph score is lower than the subgraph score of the (current) minimum subgraph, selecting the second modified subgraph as the minimum subgraph instead of the previously selected minimum subgraph.

k may be varied between a threshold number of clusters and a initial number of clusters.

Repeating the generating of the set of subgraphs for the plurality of iterations may comprise repeating the generating the set of subgraphs, reducing k by one in the k-means clustering in each successive iteration until an iteration in which k is a threshold number of clusters.

The computer-implemented method may comprise outputting the minimum subgraph.

The computer-implemented method may comprise storing the minimum subgraph instead of the input graph.

The computer-implemented method may comprise performing the minimum subgraph process for each of the input subgraphs and storing the minimum subgraphs instead of the input subgraphs.

According to an embodiment of a fifth aspect there is disclosed herein a computer program which, when run on a computer, causes the computer to carry out a method comprising: generating a set of subgraphs based on an input graph by performing k-means clustering on nodes of the input graph based on classification scores corresponding to the nodes and obtained by inputting the input graph into a graph neural network, GNN, (for classifying graphs as corresponding to one of a plurality of classes); repeating the generating of the set of subgraphs for the input graph for a plurality of iterations, varying k in the k-means clustering in each successive iteration, to obtain a plurality of candidate subgraphs which includes the subgraphs of the set of subgraphs generated in the original iteration; inputting each candidate subgraph into the GNN and obtaining classification probabilities for each candidate subgraph; computing a subgraph score for each candidate subgraph based on a difference between the input graph's classification probabilities and the candidate subgraph's classification probabilities and based on a size of the candidate subgraph; and selecting the candidate subgraph having the lowest subgraph score as a minimum subgraph of the input graph.

According to an embodiment of a sixth aspect there is disclosed herein an information processing apparatus comprising a memory and a processor connected to the memory, wherein the processor is configured to: generate a set of subgraphs based on an input graph by performing k-means clustering on nodes of the input graph based on classification scores corresponding to the nodes and obtained by inputting the input graph into a graph neural network, GNN, (for classifying graphs as corresponding to one of a plurality of classes); repeat the generating of the set of subgraphs for the input graph for a plurality of iterations, varying k in the k-means clustering in each successive iteration, to obtain a plurality of candidate subgraphs which includes the subgraphs of the set of subgraphs generated in the original iteration; input each candidate subgraph into the GNN and obtain classification probabilities for each candidate subgraph; compute a subgraph score for each candidate subgraph based on a difference between the input graph's classification probabilities and the candidate subgraph's classification probabilities and based on a size of the candidate subgraph; and select the candidate subgraph having the lowest subgraph score as a minimum subgraph of the input graph.

Features relating to any aspect/embodiment may be applied to any other aspect/embodiment.

Each iteration of the generation of subgraphs in the Figure 2 method may comprise the features of step S11 in the Figure 1 method, and description of step S11 applies equally to each iteration of the generation of subgraphs in the Figure 2 method.

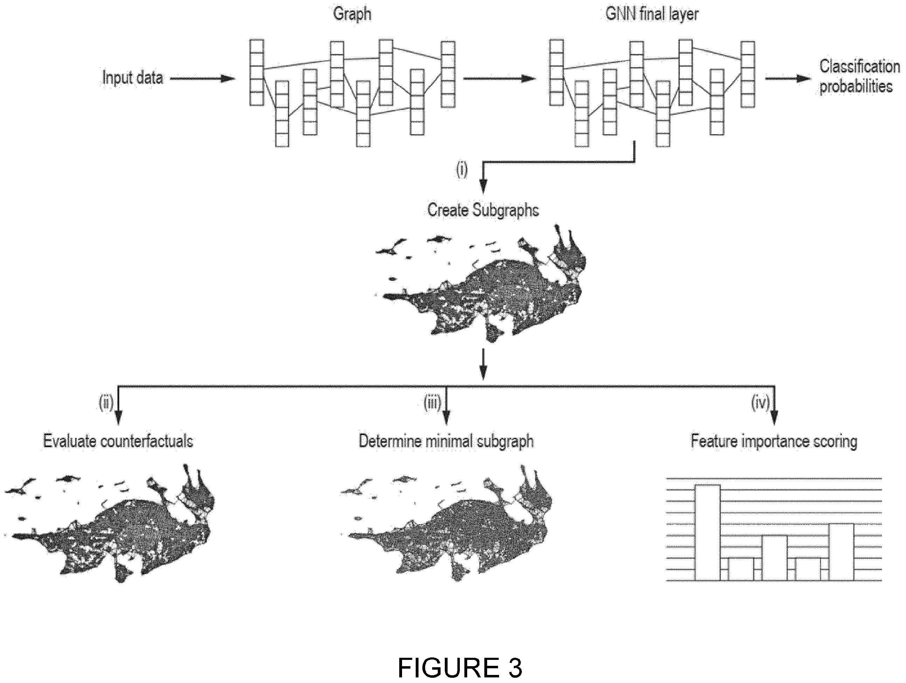

Figure 3 is a schematic diagram illustrating an overview of a method which explains a GNN's classification probabilities for an input graph with spatial coordinates in four steps.
(i) partitioning the graph into a set of subgraphs by clustering on the embedded values in the final layer of the GNN. The classification probabilities for each subgraph are then calculated.
(ii) evaluating two sets of counterfactuals:
   a. *Whole-Graph Counterfactuals* calculate the effect on the remaining graph of removing a specified subgraph from the whole graph. If removing the subgraph significantly changes the classification probabilities, then that subgraph is important to the whole graph's forecast.
   b. *Subgraph-in-Isolation Counterfactuals* calculate the classification probabilities of a subgraph when it is in isolation (i.e. by itself). The difference between the classification probabilities when a subgraph is located *within* a whole graph and when it is isolation, measures the strength of the interactions between that subgraph and its neighbouring subgraphs.
(iii) creating a single-subgraph that has similar classification probabilities to the whole graph, using a novel subgraph-based algorithm. This part of the method may be considered to belong to a 'single-subgraph' class of methods, though it differs from other methods by using subgraphs as its starting point in identifying the best single-subgraph.
(iv) calculating feature importance scores for each subgraph, by first tabularising the subgraph data into summary statistics, then using clustering to create datasets of similar subgraphs and then creating surrogate generalised additive models.

The top row in Figure 3 illustrates preprocessing of the input data to obtain embedded values in the final layer of the GNN (which may be converted into classification probabilities for the whole graph). Specifically, an input graph is generated based on the input data and the input graph is then passed through the GNN.

Figure 3 includes some illustrations of an output at each step in accordance with an example described below which relates to whole-slide images (WSIs) for breast cancer classification - the method is not limited to this example.

The Figure 3 method is described in more detail below.

Let input graph *G =* {*V, E, X*} where *V* = {*v*₁, *v*₂, ..., *vₙ*} are the graph's *n* nodes, *E* is the set of edges connecting the nodes, each node attaches *d* dimensional features , X ∈ *R*^{*n*×*d*} is the feature matrix and A ∈ *R*^{n×n} is the adjacency matrix. Let *F* be the GNN function that converts G to the embedded values *Z* = *F*(*X, A*) contained in the GNN's last embedded layer. The Figure 3 method is designed only for GNNs in which the final embedded layer is followed by a Global Average Pooling layer (or Global Sum Pooling layer) and then a softmax function. With this architecture, the embedded values *Z* are classification scores, which when pooled are logit scores. Let there be *m* classification classes. There is also a coordinate matrix *O* with the spatial coordinates of each node. A subgraph *sᵢ* has q adjacent subgraphs s_{adj 1} ... s_{adj q}, an adjacent subgraph being a subgraph with at least one node directly connected to a node of the subgraph *sᵢ* via an edge.

### Algorithm 1. Partitioning each graph into a set of subgraphs (step (i))

The algorithm presented below (steps a-e) is for a single graph. In step (i) this is carried out for a plurality of input graphs.
a. The spatial coordinates *O* are normalised, multiplied by a user-specified parameter 'co-ordinate weighting' and then appended to the embedded values *Z.* It will be appreciated that each node comprises values for a plurality of features respectively, and that there exists a vector of embedded values z for each node. As noted above, the embedded values z may be referred to as classification scores for the nodes. The value of 'co-ordinate weighting' may be chosen so as to ensure that the subgraphs are spatially connected. A subgraph may be considered a spatially connected subgraph if it meets the following conditions 1-4: 1 - Nodes have coordinates (each node has a specific position or location); 2 - Nodes are spatially close (near each other in the given space); 3 - A path exists between any two nodes (all nodes on that path belong to the subgraph); and 4 - every node has at least one neighbour (each node in the subgraph is connected to at least one other node in the subgraph).
b. K-means clustering is then applied to create *k* subgraphs, where *k* is a user-specified parameter. The user may be provided with a Calinski-Harrabaz graph to help guide their choice of *k.* The Calinski-Harrabaz graph is a graph showing the Calinski-Harrabaz index (CH index) for different values of k.
c. A 'connect isolated nodes' step may be performed. This step will find any node *vᵢ* that has two or less connections to its own subgraph and re-assign it to the subgraph that it has most connections with (if such a subgraph exists).
d. The classification probabilities for each subgraph are then calculated by applying a softmax function to the sum of the classification scores of each subgraph's nodes. The classification probabilities for a given subgraph will include a classification probability for each class of the m classes.
e. A 'merge similar subgraphs' step may be carried out. This step compares the classification probabilities of subgraph *sᵢ* against those of an adjacent subgraph *s_{adⱼ}*. If the Euclidean distance of their classification probabilities is below a user specified parameter 'merge threshold', then the two subgraphs are merged. This is repeated for each subgraph, for each of their adjacent subgraphs. For a given subgraph this step may be carried out for each adjacent subgraph in turn until the subgraph is merged or until no further adjacent subgraphs are available for comparison. Alternatively, the comparison may be carried out for all adjacent subgraphs of a subgraph and then if two or more adjacent subgraphs have a corresponding distance below the threshold distance then whichever adjacent subgraph has the smallest corresponding distance is selected for merging with the subgraph concerned.

### Algorithm 2. Evaluating of subgraph counterfactuals (step ii)

The algorithm presented below (a-b) is for a single input graph. In step (ii) this may be carried out for each of the input graphs.
a. *Whole-Graph Counterfactuals.* A counterfactual is calculated by removing a specified subgraph *sᵢ* from the whole graph G giving the remainder graph ${G}_{si}^{′}$. The differences between the classification probabilities of *G* and ${G}_{si}^{′}$ are then reported. This is repeated for each subgraph. The classification probabilities here are computed by summing the classification scores of the nodes concerned and applying the softmax function.
b. *Subgraph-in-Isolation Counterfactuals.* A counterfactual is calculated for each subgraph *sᵢ* by first removing all other subgraphs from whole graph G, leaving only the isolated subgraph *s'ᵢ* which is then passed through the GNN, giving isolation classification probabilities of *s'ᵢ.* The differences in the classification probabilities for *sᵢ* when it is part of *G* (i.e. as computed by summing the classification scores for each of the nodes, these classification scores having been generated when the entire graph G is passed through the GNN) and the isolation classification probabilities for the isolated subgraph *s'ᵢ* are then reported. This is repeated for each subgraph.

### Algorithm 3. Creating a Minimum Subgraph (iii)

The algorithm presented below (a-c) is for a single input graph. In step (iii) this may be carried out for each of the input graphs.

This algorithm generates a large number of candidate subgraphs, and uses a customised loss function to identify the best subgraph. This is then expanded or contracted until the loss is no longer being reduced.
a. A set of subgraphs are created using Algorithm 1. The k-means parameter k is initially set equal to a user-specified parameter 'maximum subgraph candidates', with a default value of twenty. Algorithm 1 is then iteratively repeated but with k being successively reduced by one, each time candidate subgraphs being generated, until k has a value of two in the final iteration. The result is a plurality of candidate subgraphs, including the subgraphs generated in the initial iteration.
b. Each candidate subgraph *sᵢ* created in the above iterations is then passed through the GNN and its classification probabilities Pₛᵢ = {p_{si_1}, p_{si_2}, , ... , p_{si_m},} are determined by applying the softmax function to the sum of the candidate subgraph's classification scores. A loss function then (i) compares these with the classification probabilities of the whole graph *P_{G} =* {*p*_{*G_*1}, *p*_{*G_*2}*, , ... , p_{G_m}*,}, and (ii) penalises *sᵢ* based on number of nodes which is multiplied by the user-specified parameter *λ* $loss = Euclidean Distance \left({P}_{si}, {P}_{G}\right) + λ Size \left({s}_{i}\right)$
c. The subgraph *s*_{*b*est} with the lowest loss is selected, and the loss value is stored in *loss_{best}.* For each boundary between *s_{best}* and each adjacent subgraph *s_{adj}, s_{best}* is evaluated for whether its loss is reduced if (i) it is expanded by one layer into *s_{ad_j}* and/or if (ii) it is contracted by one layer, with the nodes being reassigned to *s_{adj}.* This process is repeated until the loss no longer improves.

Pseudo code for algorithm 3 is shown below.

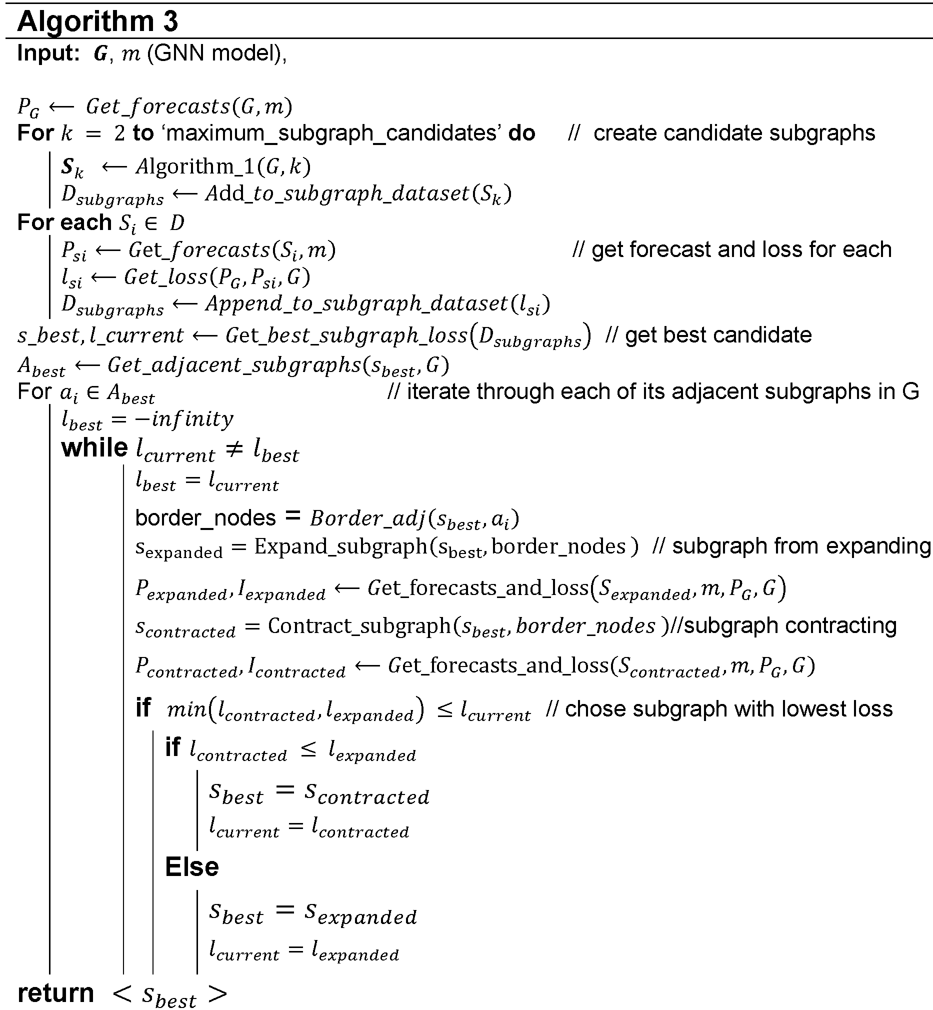

### Algorithm 4. Calculating feature importance scores (step iv)

a. Algorithm 1 partitions a graph into its subgraphs. For each subgraph of each input graph, for each of its features summary statistics are collected, including e.g.: any of mean, maximum, standard deviation, skewness coefficient, kurtosis coefficient, trimmed mean, inter-quartile range, among other statistical measures. This is done for all subgraphs for all the input graphs (which may be considered part of a the training dataset), creating a regression dataset where each row contains: the summary statistics for one subgraph, that subgraph's classification probabilities plus the subgraph ID and the graph ID. The summary statistics may be referred to as statistical measures. A given statistical measure for a given feature corresponding to a given subgraph is computed for each value of that feature across that subgraph.
b. The regression dataset is then separated into *r* datasets using k-means, where *r* is the user-specified parameter 'number of regression clusters'. The clustering is performed just on the summary statistics. The *r* new datasets each reference subgraphs with similar summary statistics, which will then share a similar space in the GNN's domain. It is by focusing on this limited range of a GNN's domain, that it becomes possible to create accurate surrogate models.
c. The user then has a choice between two machine learning algorithms that can be used to build the surrogate models: either a Gradient Boosted Machine (GBM) or a Generalised Additive Model (GAM). In other implementations, other methods could be used for generating surrogate models.
   i) Either a set of GBMs is created, one for each of the r datasets, for each of the m classification classes. Feature importance scores are then determined using the algorithm TreeSHAP (shap.readthedocs.io/en/latest/api.html). The GBMs may be created for example using XGBoost's library (xgboost.readthedocs.io/en/latest/tutorials/index.html). SHAP (SHapley Additive exPlanations) values quantify the contribution of each feature to a model's prediction. TreeSHAP is an algorithm designed to efficiently compute SHAP values for tree-based models. It leverages the structure of decision trees to streamline calculations. This makes it suitable for explaining predictions in large-scale tree ensemble models.
   ii) A set of generalised additive models (henceforth: GAM), is created, one for each of the *r* datasets, for each of the *m* classification classes. Feature selection for each GAM model is performed using a step-wise process using Akaike information criterion. The GAM formulas will be of the form: probability(*sᵢ* ∈ *classification class Cⱼ*) *= f₁*(*X₁*) *+ f₂*(*X₂*) *+* ··· *+ f_{M}*(*X_{N}*)
      where the *fᵢ* () are smooth functions that enable the modelling of nonlinear functions. The variables X₁, X₂, etc. are the statistical measures of features. For instance, X₁ may be the standard deviation of "feature 1". The generation of the GAMs is described in more detail below. The result of generating the GAMs is one GAM per class per dataset. Each dataset may be referred to as a subgraph cluster. Each GAM approximates a probability for a given class for subgraphs of a given cluster in terms of variables which are statistical measures of the features.
      Partial dependence functions may be used to visualise each of these functions.
      Calculate feature importance scores for each subgraph of selected graph *G.* These are calculated for each feature per class and per subgraph, by summing the contribution of all the summary statistics terms in the GAM equation for the class which refer to that feature, for the subgraph concerned. For example, the GAM equation for a given subgraph cluster and for a given class might include five terms based respectively on five variables X₁ to X₅ where *X*₁, *X*₂, *X*₃ are summary statistics of feature one and *X*₄, *X*₅ are summary statistics of feature two. *X*₁ is, say, standard deviation for feature one, *X*₂ is skewness coefficient for feature one, and so forth. The contribution that the feature 1 terms make to the dependent variable (classification probability) is then: $partial contribution of feature one = {f}_{1} \left({X}_{1}\right) + {f}_{2} \left({X}_{2}\right) + {f}_{3} \left({X}_{3}\right)$
      The feature importance score is computed for the given subgraph by evaluating the terms based on the actual values of the variables, e.g. by plugging in the standard deviation of feature 1 for the given subgraph to evaluate the first term, plugging in the skewness coefficient of feature 1 for the given subgraph to evaluate the second term, etc.
      The result is a plurality of feature importance scores, each score corresponding to a feature of the plurality of features, a subgraph of the plurality of subgraphs, and a class of the plurality of classes, and indicating importance of the feature concerned to the classification probability of the subgraph concerned corresponding to the class concerned.
d. The accuracy statistic 'mean absolute error' of each of the GBM or GAM models is calculated over all the graphs in a test dataset. This is done for each test graph of the test dataset by, for each test graph, determining statistical measures for the features in the test graph and finding the closest dataset (subgraph cluster) based on Euclidean distance between the statistical measures of the test graph and the average statistical measures of each dataset, and applying the GAMs (or GBM) corresponding to that dataset to the features of the test graph to obtain approximated classification probabilities. These approximated classification probabilities are compared with the classification probabilities obtained by passing the test graph through the GNN to compute the error for a given test graph. The mean absolute error of a given GAM (or GBM) is obtained by computing the mean of the errors for each test graph for that GAM (or GBM).

Each GAM is generated using the following step-wise process involving the 'Akaike information Criteria' which is used to compare the relative quality of different statistical models for a given dataset. It helps in model selection by balancing the goodness of fit and the simplicity of the model.
1. Start with No variables: Begin with a model that includes only the intercept.
2. Select the First variable:
   ·Fit models with each individual variable.
   ·Calculate the AIC for each model.
   ·Select the variable that results in the lowest AIC.
3. Iteratively Add variables:
   ·Add the selected variable to the model.
   ·Fit models by adding each remaining variable one at a time to the current model.
   ·Calculate the AIC for each new model.
   ·Select the variable that results in the lowest AIC and add it to the model.
4. Check for Improvement:
   ·Continue the process of adding variables iteratively.
   ·Stop when adding a new variable does not result in a lower AIC compared to the previous model.
5. Final Model:
   ·The final model is the one where no further addition of variable improves the AIC.

Psuedo code for Algorithm 4 is shown below.

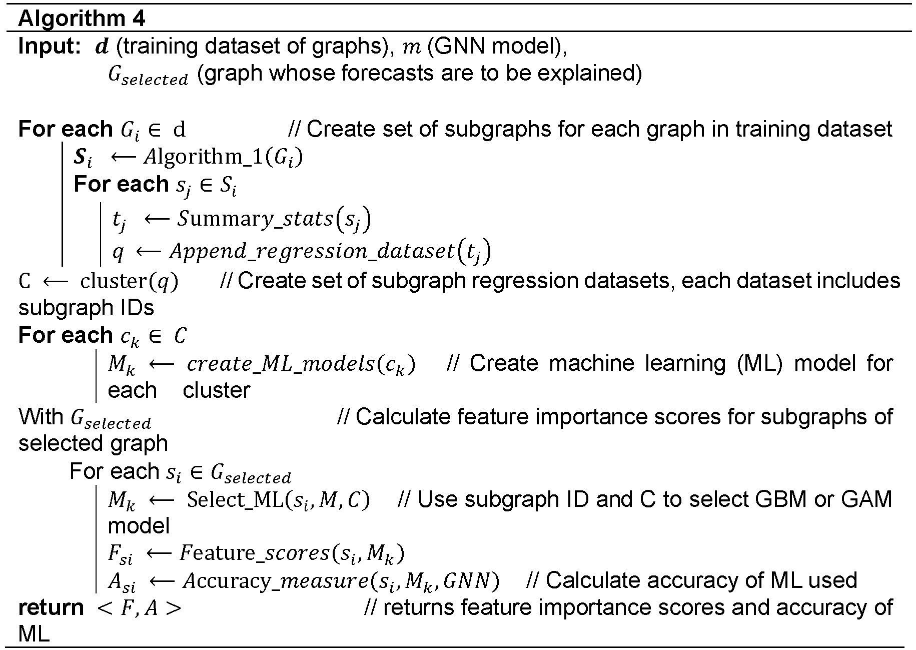

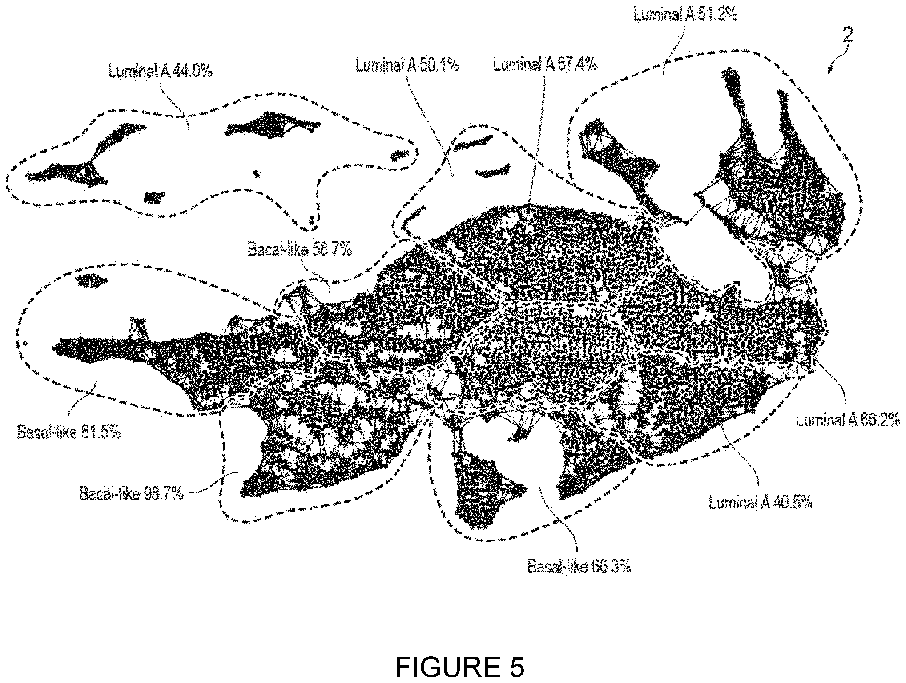

The output of the Figure 3 method is, in an implementation, the counterfactual information for at least one subgraph (e.g. each subgraph), the minimum subgraph for at least one input graph (e.g. each input graph), and feature importance scores for at least one subgraph cluster (e.g. each subgraph cluster). A further output comprises a "heatmap" style graphic, like that illustrated in Figure 5 (described below), which shows subgraphs of an input graph and for each subgraph displays the class with the highest classification probability for the subgraph, optionally together with the classification probability. The classes may be indicted using colour coding. A method may comprise generating and outputting any of these outputs, which each help a user to understand the GNN and therefore improves GNN XAI.

In another implementation, the Figure 3 method may comprise (additionally or alternatively) pruning.

For instance, the feature importance scores may be used to identify unimportant (less important) features. In an implementation, aggregate feature importance scores are computed per feature by summing or averaging the feature importance scores for that feature across the classes and subgraph clusters, and if any aggregate feature importance score is below a score threshold that feature is selected for pruning - each input graph is pruned to remove the selected feature. The pruning may be carried out on a wider dataset of graphs, the input graphs for which the feature importance scores are determined being a subset of the dataset of graphs.

Additionally of alternatively, the minimum subgraph process (algorithm 3) may be used to find a minimum subgraph for each input graph and this minimum subgraph may be stored in place of the original input graph.

The above pruning functions may reduce a storage amount for storing graphs and may reduce a processing load for processing the graphs. There is disclosed herein a method comprising performing algorithm 3 of the Figure 3 method for a plurality of input graphs, which may include pruning as described above. There is also disclosed herein a method comprising performing algorithm 4 which may comprise pruning based on feature importance scores as described above. There is also disclosed herein a method comprising performing algorithm 3 of the Figure 3 method (or the Figure 2 method) for a plurality of input graphs and pruning the input graphs to obtain the minimum subgraphs (or replacing the input graphs with the minimum subgraphs), followed by pruning of the minimum subgraphs according to algorithm 4 (or the Figure 1 method).

The features described above are features of the input graph included in each node. For instance, where each input graph is generated based on a WSI, each node corresponds to a patch of tissue and the features may comprise cell counts for the patch concerned for any of: neoplastic, inflammatory, connective, dead and non-neoplastic cells. Where each input graph is generated based on a molecule, each node corresponds to an atom and the features are properties of the atom when located in the molecule at a particular point in time, and may comprise any of atomic coordinated, electronegativity, the presence/absence of a hydrogen bond, among others.

The Figure 3 method may be considered an implementation of the Figure 1 method. Step (i) in Figure 3 may be considered to correspond to step S11 in Figure 1 and vice versa and corresponding description may apply. Step a of algorithm 4 may be considered to correspond to steps S12 and S13 in Figure 1 and vice versa and corresponding description may apply. Step b of algorithm 4 may be considered to correspond to step S14 of Figure 1 and vice versa and corresponding description may apply. Step c of algorithm 4 may be considered to correspond to steps S15 and S16 of Figure 1 and vice versa and corresponding description may apply.

Step (iii) of Figure 3 may be considered an implementation of the Figure 2 method. Step a of algorithm 3 may be considered to correspond to steps S21 and S22 in Figure 2 and vice versa and corresponding description may apply. Step b of algorithm 3 may be considered to correspond to steps S23 and S24 of Figure 2 and vice versa and corresponding description may apply. Step c of algorithm 3 may be considered to correspond to step S25 and vice versa and corresponding description may apply.

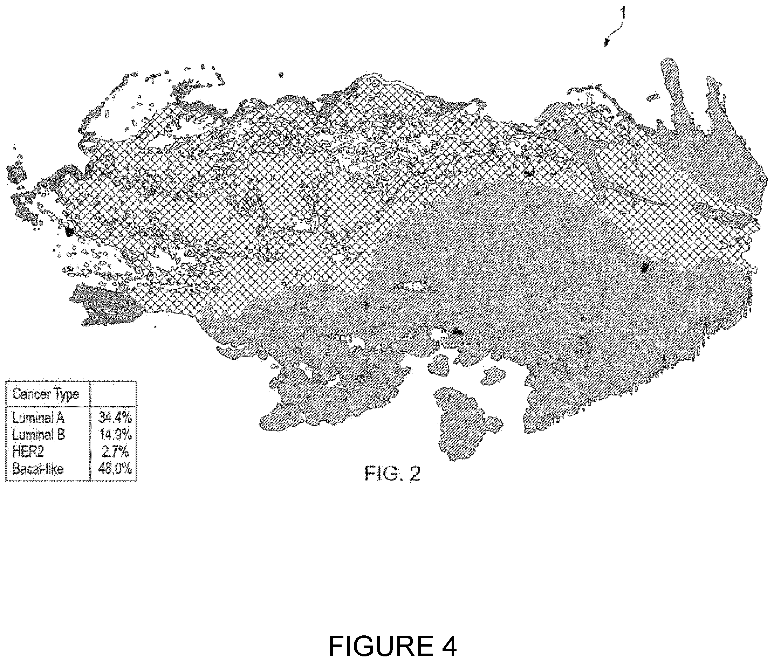

A worked example is described below. The worked example is for a GNN that has been trained to classify Whole Slide Images (henceforth WSI) of breast cancer tissue. The dataset uses the PAM50 breast cancer subtyping system, for which there are four subtypes of cancer: Luminal A, Luminal B, HER2, and Basal-like. The WSI have been pre-processed and converted into graphs using Hover-Net ("Hover-Net: Simultaneous segmentation and classification of nuclei in multi-tissue histology images", Graham et al., 2019). Each node corresponds to a patch of tissue and has five features, which are cell counts for that patch: neoplastic, inflammatory, connective, dead and non-neoplastic cells. Two nodes are connected by an edge, if the corresponding patches of tissue are close to each other in Euclidean distance. The x and y coordinates of each node are also known though they are not used by the GNN. The pre-processing with Hover-Net is not a necessary part of a method. The worked example is shown, in respect of the steps (i)-(iii), for a single WSI - a WSI that has been classified by the GNN to have a 48% probability of breast cancer. Figure 4 illustrates a representation of the WSI and the classification probabilities determined by the GNN.

### Algorithm 1. Partitioning the graph into a set of subgraphs (i)

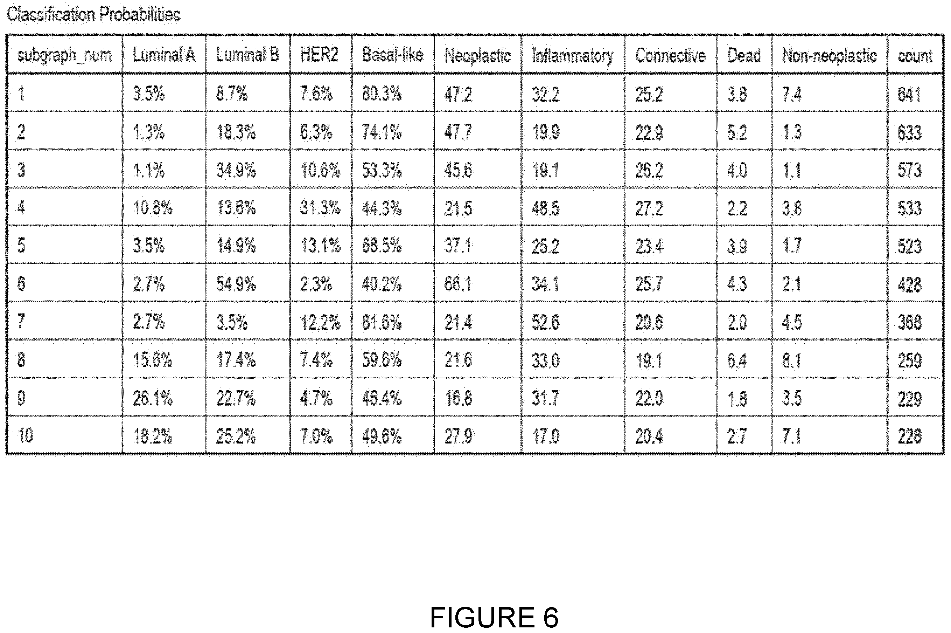

The input graph corresponding to the WSI is partitioned into a set of k=10 subgraphs. The subgraphs are illustrated in Figure 5 (together with classification probabilities). Figure 6 is a table illustrating classification probabilities of the ten subgraphs, together with average cell count information. That is, for each subgraph, the average of each feature across its nodes is given - this is a summary statistic, the average of each feature per subgraph.

### Algorithm 2. Evaluation of subgraph counterfactuals (ii)

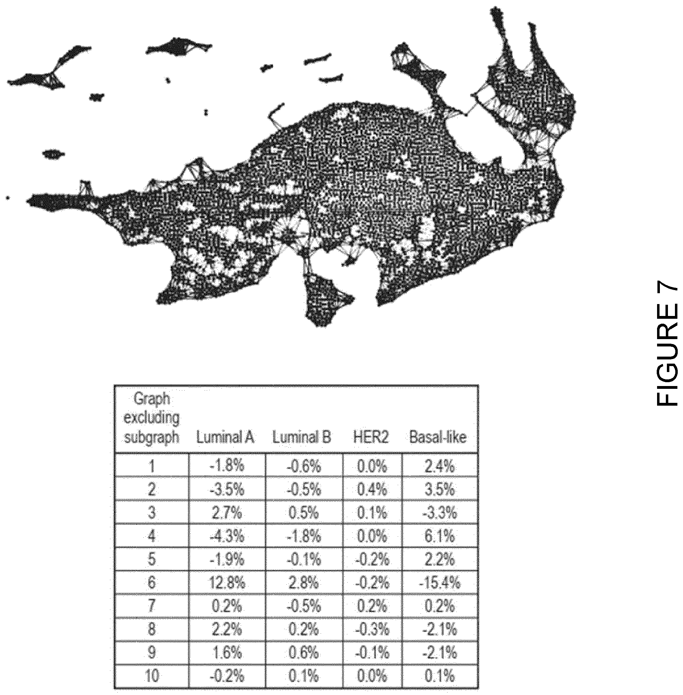

Whole-Graph and Subgraph-in-Isolation counterfactuals are then calculated. The whole-graph counterfactuals are illustrated in Figure 7. Figure 7 also illustrates the graph corresponding to the counterfactual of removing subgraph 6, which is highlighted in the table. The table shows that removing subgraph 6 decreases the probability for Basal-like by 15.4% and increases the probability of Luminal A by 12.8%. The table also includes the results of removing other subgraphs.

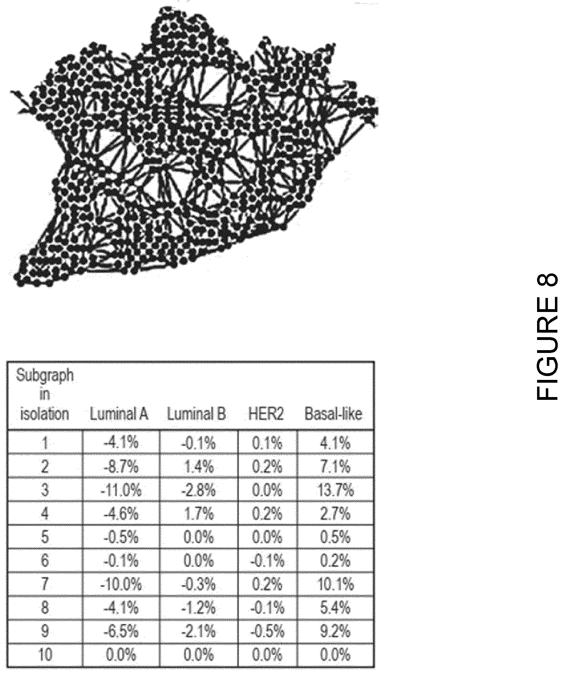

The subgraph-in-isolation counterfactuals are illustrated in Figure 8. Figure 8 also shows the counterfactual of subgraph 6 being in isolation, which is highlighted in the table. The table shows that the differences in classification probabilities between being the located within the whole graph and being in isolation. For subgraph 6, the differences are very small, indicating that it has little interaction with other subgraphs.

Figures 7 and 8 may be considered GUI (graphical user interface) screen captures, in which GUI a user may select a row in the table to display the graph with that subgraph removed (in Figure 7) or that subgraph (in Figure 8).

### Algorithm 3. Creating a Minimum Subgraph (iii)

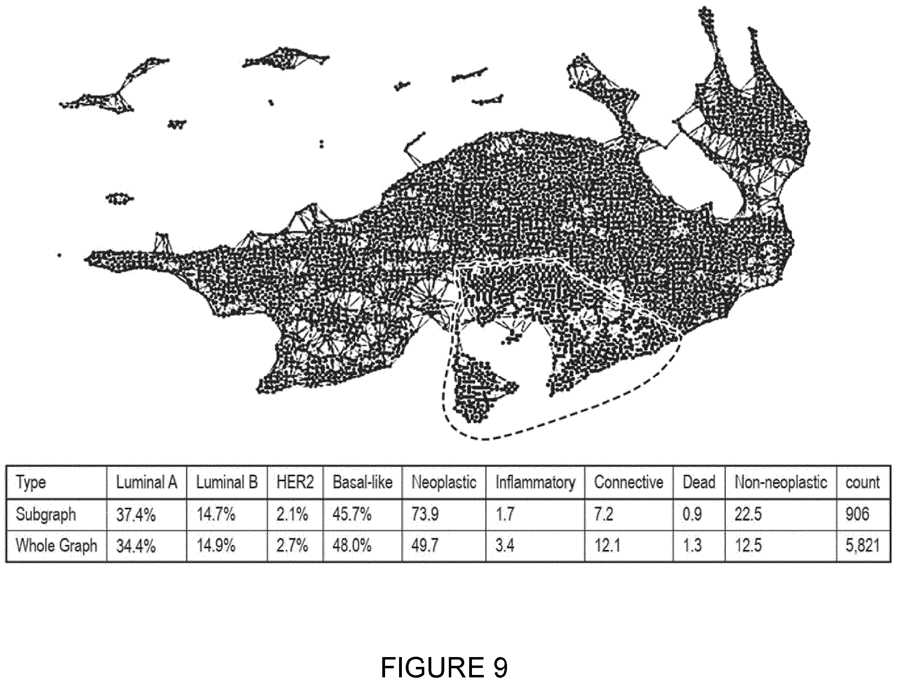

A minimum subgraph is determined. The minimum subgraph is illustrated in Figure 9 as a highlighted portion of the original input graph (highlighted by the dashed line). The minimum subgraph may be referred to as an explanatory subgraph. Figure 9 also shows classification probabilities and average cell counts for the original input graph and the explanatory subgraph. It will be appreciated that the explanatory subgraph has similar classification probabilities to the whole graph but is less than 16% of the size.

### Algorithm 4. Calculating feature importance scores (iv)

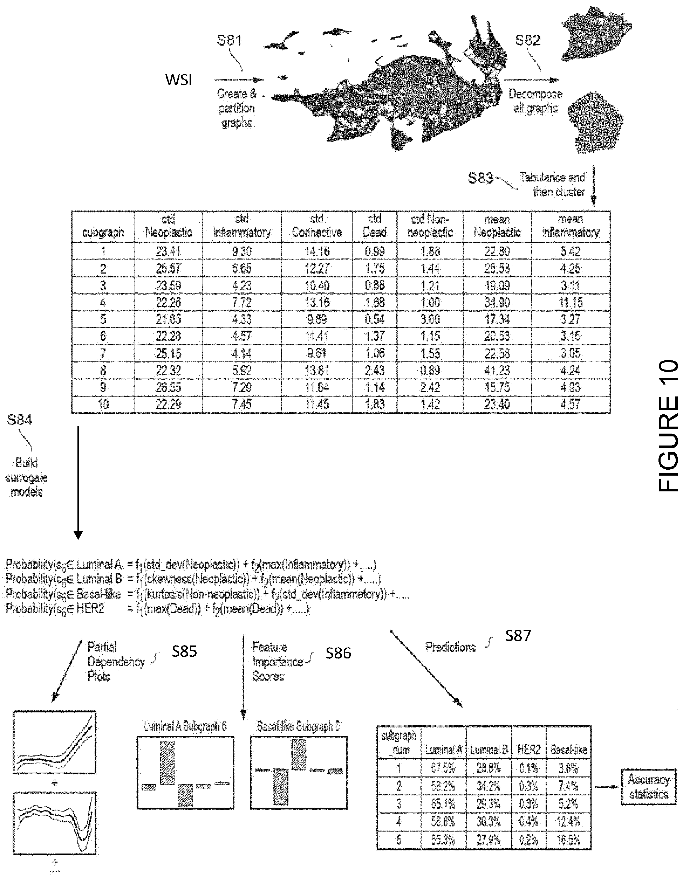

Figure 10 illustrates a pipeline/method for calculating feature importance scores.

In step S81 algorithm 1 is used to generate subgraphs for each of plurality of input graphs. In step S82 the graphs are decomposed into the subgraphs so that the subgraphs can be individually processed. In step S83 summary statistics are computed for each subgraphs and the data tabularised, and clustering is performed on the subgraphs based on the summary statistics to generate subgraph clusters. A snippet of the full tabularised data is shown in Figure 10 - each row here includes a subgraph ID and summary statistics for the subgraph.

In step S84 surrogate models are built/generated as described in algorithm 4 (c) above. Figure 10 partially shows four models which approximate the classification probabilities for a particular subgraph cluster. It will be appreciated that each model approximates a classification probability in terms of variables, each variable being a summary statistic of a feature, e.g. the standard deviation of neoplastic cell count across the subgraph cluster.

In step S85 partial dependency plots are generated for visualising the effect of individual features on the classification probabilities. The partial dependency plots help to visualise the nonlinear function that the GAMs fit to the regression datasets. In step S86 feature importance scores are generated and output, e.g. in a bar chart format as shown in Figure 10. Aggregate feature importance scores may also/alternatively be generated and output. In step S87 predictions are made for each graph of a test dataset using the surrogate models, to approximate classification probabilities. These are compared against classification probabilities determined by passing the graphs of the test dataset through the GNN to determine accuracy statistics, which are output, e.g. the mean absolute error.

The methodologies disclosed herein may be applied to any GNN graph classification or regression application in which (i) the nodes have spatial coordinates (ii) the GNN's final embedded layer is following by a Global Average Pooling layer (which is a frequently used GNN architecture).

In particular, the methodologies disclosed herein may be applied to GNNs which classify graphs based on WSI of breast cancer tissue as corresponding to a breast cancer subtype; or to GNNs which classify graphs based on molecules. For example, in the molecules case, there are two classes in the MUTAG dataset (huggingface.co/datasets/graphs-datasets/MUTAG) which represent whether a molecule has a mutagenic effect on a specific bacterium (Salmonella typhimurium) or not - in one example the GNN classifies a graph as corresponding to one of these two classes.

Methodologies disclosed herein:
- explain classifications / regression scores in terms of spatially connected subgraphs;
- provide feature importance scores by subgraph (achieved by a novel algorithm that is first to use summary statistics of subgraphs, clustering and then surrogate models); and/or
- create single-subgraphs based on spatially continuous subgraphs.

Conventionally, a key challenge for GNN XAI methods is measuring node feature importance over a whole graph. This is because the feature values are distributed over a graph's nodes. For Al systems in other modalities (eg with tabular data or images), a common approach is to synthesise a regression dataset based on the training dataset and then construct a surrogate model. However, creating a corresponding GNN XAI method has conventionally had only limited success. Barriers to providing a solution include the difficulty (i) that GNNs are complex nonlinear models whose behaviour across a whole graph is difficult to model by understandable mathematical methods such as regression (ii) of ensuring that the distribution of feature values in the regression dataset remains meaningful and is not 'out-of-distribution' and (iii) of converting the effects of the varying feature values occurring across a graph's nodes into feature importance scores for a whole graph.

A second key challenge for GNN XAI methods is that the graphs evaluated with GNNs often have large numbers (>500) of nodes and edges. In such cases it may be difficult to explain a graph's classification by a small number of nodes and edges. In such cases, explanations based on subgraphs are more understandable, as well as faster to produce. A comparative method, GCExplainer ("GCExplainer: Human-in-the-Loop Concept-based Explanations for Graph Neural Networks", Lucie Charlotte Magister et al, arxiv.org/abs/2107.11889), provides explanations in terms of multiple subgraphs. Its subgraphs are created by clustering based on each node's embedded value from either the last convolutional layer or last pooled layer. However, this clustering groups together nodes from *all* the graphs in the training dataset into what it calls 'concepts'. Hence each subgraph is neither spatially continuous nor formed just from nodes in one graph, making the subgraphs difficult to understand.

A third key challenge is specifically for single-subgraph methods (methods which aim to identify a single small subgraph that in some way explains a GNN's output for the whole graph). These may work well for graphs that contain simple motifs (or other edge patterns) when these are key to the graphs' classification. However, many graph datasets do not contain such motifs, and these methods then appear to perform poorly. This has been the case with breast cancer graphs (based WSI of breast cancer tissue, as in the worked example above), where classifications are determined primarily based on the distribution of node features. In this case, existing single-subgraph methods tend to produce large subgraphs that poorly match their whole graph classification probabilities. The subgraphs are also disconnected, further reducing their understandability, and in some cases their meaningfulness (e.g. in cancer WSIs).

The disclosed methodologies provide a solution to each of the three key challenges identified above. Regarding the first key challenge, the feature importance algorithm (algorithm 4) resolves the problem of GNN's nonlinearity preventing the creation of surrogate models, by creating surrogate models for groups of subgraphs which have similar summary statistics. With each of these groups, it is possible to separately create accurate surrogate models by using generalised additive models or GBMs which can capture complex non-linear patterns. Generalised additive models also have a structure that then enables the calculation of feature importance scores. Similarly, for GBMs, TreeSHAP enables the calculation of feature importance scores. Regarding the second challenge, the disclosed methodologies are generally based on subgraphs, which provide more understandable, intuitive explanations. The counterfactual and minimum subgraph algorithms (algorithms 2 and 3) are based on subgraphs making them fast and scalable. Regarding the third challenge, the minimum subgraph algorithm (algorithm 3) uses clustering based on nodes' embedded values and does not depend on motifs or other types of edge pattern. It's algorithm also produces spatially connected subgraphs.

Advantages of the disclosed methodologies include, among other advantages:
- The only GNN XAI that explains classifications / regression scores in terms of spatially continuous subgraphs (see Algorithm 1). By being spatially continuous, the subgraphs are more meaningful and understandable to the user.
- The only GNN that provides counterfactuals using spatially continuous subgraphs.
- The only GNN XAI that provides feature importance scores by subgraph (see Algorithm 4). Given that node feature values are a central input to a GNN's calculations, feature importance scores are an important output of a full GNN XAI method. Providing the scores by subgraph enables the user to understand how the GNN treats features differently in different regions of the graph.
- The only GNN XAI that measures the accuracy of its feature importance scores.
- The only GNN XAI that uses subgraphs to determine single-subgraphs (a minimum subgraph). This has the benefits of:
   ▪ fast run times, as it is not focusing on edges and nodes
   ▪ produces single-subgraphs that are spatially continuous.
   ▪ performing well for graphs where the classification/regression score is not strongly based on the presence of motifs or other edge patterns (existing GNN XAI methods perform poorly with these).
- Pruning (based on the feature importance scores and/or based on the minimum subgraphs) enable savings in storage space and subsequent processing load. Minimum subgraphs generated as described above may be stored in place of the original graphs to reduce storage space needed and to reduce processing load for subsequent processing of the minimum subgraphs. Graphs may be pruned according to the feature importance scores - and this pruning may be performed for a wider dataset for the GNN when only a subset of the graphs have been used to determine the feature importance scores. Storing the pruned graphs will thus reduce storage space needed for storing the graphs and may reduce processing load for subsequent processing of the graphs, e.g. including passing the graphs through the GNN for classification.

Each of these enables both users and developers to understand how the GNN is behaving and know if its outputs can be trusted.

Whilst the problems with existing methods in terms of counter-factual and single-subgraph explanations may be less pronounced for GNNs trained on smaller graphs (<=500 nodes), the problem with identifying single-subgraph explanations in cases where there are not motifs or other edge patterns remains, and furthermore the barriers to measuring feature importance apply with graphs of all sizes.

The disclosed methodologies provide explanations of the classification / regression scores of graphs (e.g. large graphs (>500 nodes)) that have spatial coordinates. This is done by focussing on subgraphs as an explanatory unit, rather than a graph's nodes and edges. This leads to more understandable explanations that can locate the most important regions of a graph. It also provides the basis for the novel algorithm that is able to measure feature importance scores, despite the challenges of assessing the impact of features whose values can be distributed over all of a graph's nodes. Focussing on subgraphs is also advantageous for another type of GNN explanation, which identifies a single subgraph that is representative of the whole graph. Disclosed methodologies take subgraphs as the starting point, and may identify these single subgraphs faster than algorithms based on processing nodes and edges. Furthermore, the counterfactuals in the disclosed methodologies differ from those in exisiting XAI methods, which neither explain the importance of each subgraph nor the strength of interactions between subgraphs.

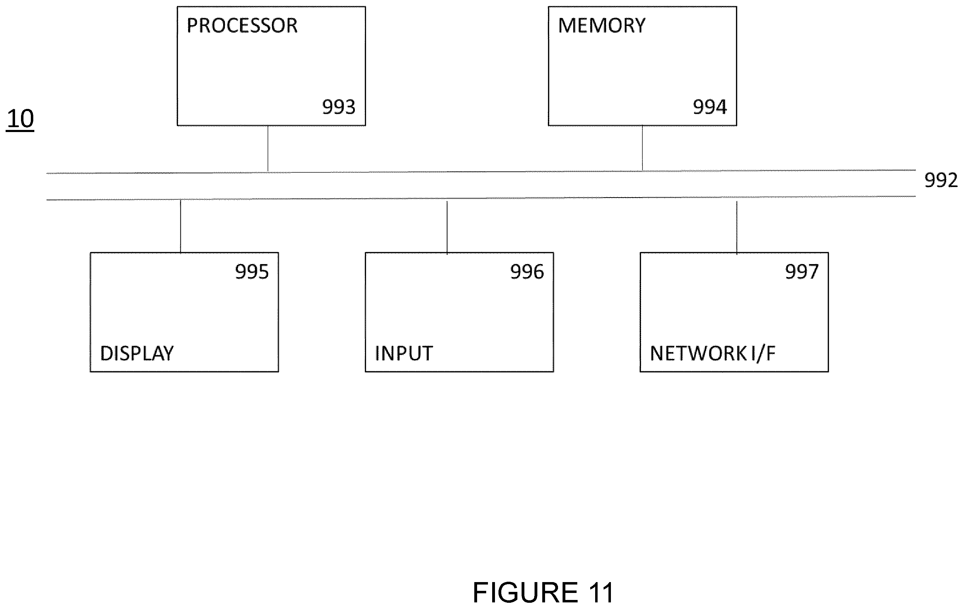

Figure 11 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S12-S16, S21-S25, (i)-(iv), and S81-S87.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S12-S16, S21-S25, (i)-(iv), and S81-S87. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store graphs and/or data of a GNN and/or subgraphs and/or a minimum subgraph and/or summary statistics and/or surrogate models and/or regression datasets and/or subgraph clusters and/or feature importance scores and/or accuracy statistics and/or input data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device, such as a representation of at least one subgraph and/or partial dependency plots and/or feature importance scores and/or accuracy statistics and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 11. Such a computing device need not have every component illustrated in Figure 11, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention, e.g. any of steps S12-S16, S21-S25, (i)-(iv), and S81-S87, may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:
generating, for each of a plurality of input graphs, a set of subgraphs by performing k-means clustering on nodes of the input graph based on classification scores corresponding to the nodes and obtained by inputting the input graph into a graph neural network, GNN, wherein each node in each input graph comprises a plurality of values corresponding respectively to a plurality of features;
determining statistical measures of each feature's values in each of a plurality of subgraphs comprising the subgraphs of each set of subgraphs, to generate a set of statistical measures for each subgraph, and obtaining for each subgraph, based on the classification scores corresponding to the nodes of the subgraph, classification probabilities corresponding respectively to a plurality of classes;
performing k-means clustering on the subgraphs based on the statistical measures to generate a plurality of clusters of subgraphs;
generating, for each cluster of subgraphs, a set of surrogate models to approximate the classification probabilities, respectively, of the subgraphs in the cluster, in terms of the statistical measures; and
determining, based on the surrogate models of each set of surrogate models, feature importance scores, each feature importance score corresponding to a feature of the plurality of features, a subgraph of the plurality of subgraphs, and a class of the plurality of classes, and indicating importance of the feature to the classification probability of the subgraph corresponding to the class.

2. The computer-implemented method as claimed in claim 1, wherein generating each set of subgraphs comprises performing the k-means clustering on the nodes of the input graph based on the classification scores corresponding to the nodes and based on spatial coordinates of the nodes.

3. The computer-implemented method as claimed in claim 1 or claim 2, wherein generating each set of subgraphs comprises, after performing the k-means clustering, assigning any node with fewer than a threshold number of connections with its subgraph to another subgraph with which the node has a greater number of connections.

4. The computer-implemented method as claimed in any of claims 1 to 3, wherein generating each set of subgraphs comprises, after performing the k-means clustering:
determining classification probabilities of each subgraph of the set of subgraphs based on the classification scores corresponding to the nodes of the subgraph; and
for each subgraph of the set of subgraphs, when a distance between the subgraph's classification probabilities and an adjacent subgraph's classification probabilities is below a distance threshold, merging the two subgraphs into one subgraph.

5. The computer-implemented method as claimed in any of the preceding claims, wherein the statistical measures of each feature's values comprise a plurality of mean, maximum, standard deviation, skewness coefficient, kurtosis coefficient, trimmed mean, and inter-quartile range.

6. The computer-implemented method as claimed in any of the preceding claims, wherein generating each set of surrogate models comprises generating a set of gradient boosted machines, GBMs, or generating a set of generalized additive models, GAMs.

7. The computer-implemented method as claimed in any of the preceding claims, comprising outputting the feature importance scores.

8. The computer-implemented method as claimed in any of the preceding claims, comprising:
for each subgraph, removing the subgraph from the input graph concerned to generate a remainder graph, and determining a difference between the input graph's classification probabilities and the remainder graph's classification probabilities; and
outputting the difference between the input graph's classification probabilities and the remainder graph's classification probabilities for each subgraph.

9. The computer-implemented method as claimed in any of the preceding claims, comprising:
for each subgraph, inputting the subgraph to the GNN to obtain isolated classification probabilities and determining a difference between the subgraph's isolation classification probabilities and the subgraph's classification probabilities computed based on the classification scores of the subgraph's nodes as part of the input graph; and
outputting the difference between the subgraph's isolation classification probabilities and the subgraph's classification probabilities computed based on the classification scores of the subgraph's nodes as part of the input graph for each subgraph.

10. The computer-implemented method as claimed in any of the preceding claims, comprising performing a minimum subgraph process for one of the input graphs comprising:
repeating the generating of the set of subgraphs for the input graph for a plurality of iterations, varying k in the k-means clustering in each successive iteration, to obtain a plurality of candidate subgraphs which includes the subgraphs of the set of subgraphs generated in the original iteration;
inputting each candidate subgraph into the GNN and obtaining classification probabilities for each candidate subgraph;
computing a subgraph score for each candidate subgraph based on a difference between the input graph's classification probabilities and the candidate subgraph's classification probabilities and based on a size of the candidate subgraph; and
selecting the candidate subgraph having the lowest subgraph score as a minimum subgraph of the input graph.

11. The computer-implemented method as claimed in any of the preceding claims, wherein the input graphs correspond to whole-slide images, WSIs, each node in an input graph corresponding to a patch of the WSI.

12. The computer-implemented method as claimed in any of the preceding claims, wherein the GNN is for classifying an input graph as corresponding to a breast cancer sub-type.

13. A computer program which, when run on a computer, causes the computer to carry out a method comprising:
generating, for each of a plurality of input graphs, a set of subgraphs by performing k-means clustering on nodes of the input graph based on classification scores corresponding to the nodes and obtained by inputting the input graph into a graph neural network, GNN, wherein each node in each input graph comprises a plurality of values corresponding respectively to a plurality of features;
determining statistical measures of each feature's values in each of a plurality of subgraphs comprising the subgraphs of each set of subgraphs, to generate a set of statistical measures for each subgraph, and obtaining for each subgraph, based on the classification scores corresponding to the nodes of the subgraph, classification probabilities corresponding respectively to a plurality of classes;
performing k-means clustering on the subgraphs based on the statistical measures to generate a plurality of clusters of subgraphs;
generating, for each cluster of subgraphs, a set of surrogate models to approximate the classification probabilities, respectively, of the subgraphs in the cluster, in terms of the statistical measures; and
determining, based on the surrogate models of each set of surrogate models, feature importance scores, each feature importance score corresponding to a feature of the plurality of features, a subgraph of the plurality of subgraphs, and a class of the plurality of classes, and indicating importance of the feature to the classification probability of the subgraph corresponding to the class.

14. An information processing apparatus comprising a memory and a processor connected to the memory, wherein the processor is configured to:
generate, for each of a plurality of input graphs, a set of subgraphs by performing k-means clustering on nodes of the input graph based on classification scores corresponding to the nodes and obtained by inputting the input graph into a graph neural network, GNN, wherein each node in each input graph comprises a plurality of values corresponding respectively to a plurality of features;
determine statistical measures of each feature's values in each of a plurality of subgraphs comprising the subgraphs of each set of subgraphs, to generate a set of statistical measures for each subgraph, and obtain for each subgraph, based on the classification scores corresponding to the nodes of the subgraph, classification probabilities corresponding respectively to a plurality of classes;
perform k-means clustering on the subgraphs based on the statistical measures to generate a plurality of clusters of subgraphs;
generate, for each cluster of subgraphs, a set of surrogate models to approximate the classification probabilities, respectively, of the subgraphs in the cluster, in terms of the statistical measures; and
determine, based on the surrogate models of each set of surrogate models, feature importance scores, each feature importance score corresponding to a feature of the plurality of features, a subgraph of the plurality of subgraphs, and a class of the plurality of classes, and indicating importance of the feature to the classification probability of the subgraph corresponding to the class.

15. A computer-implemented method comprising performing a minimum subgraph process for an input graph comprising:
generating a set of subgraphs based on an input graph by performing k-means clustering on nodes of the input graph based on classification scores corresponding to the nodes and obtained by inputting the input graph into a graph neural network, GNN;
repeating the generating of the set of subgraphs for the input graph for a plurality of iterations, varying k in the k-means clustering in each successive iteration, to obtain a plurality of candidate subgraphs which includes the subgraphs of the set of subgraphs generated in the original iteration;
inputting each candidate subgraph into the GNN and obtaining classification probabilities for each candidate subgraph;
computing a subgraph score for each candidate subgraph based on a difference between the input graph's classification probabilities and the candidate subgraph's classification probabilities and based on a size of the candidate subgraph; and
selecting the candidate subgraph having the lowest subgraph score as a minimum subgraph of the input graph.
